# EUROPEAN PATENT APPLICATION

(11) **EP 4 116 708 A1**
(43) Date of publication of application: **11.01.2023**
(21) Application number: 21765042.3
(22) Date of filing: 01.03.2021
(51) Int. Cl.: G01N 33/15, G01N 30/44, G01N 30/46

(54) **CHROMATOGRAPH, AND SAMPLE ANALYSIS METHOD**

(30) Priority: 04.03.2020 JP 2020036460
(71) Applicant: Ushio Denki Kabushiki Kaisha, Tokyo 100-8150 (JP)
(72) Inventor: ABE, Ryoji, Tokyo 100-8150 (JP); SUZUKI, Shinji, Tokyo 100-8150 (JP)
(74) Representative: Tomerius, Isabel
(86) International application number: PCT/JP2021/007745
(87) International publication number: WO 2021/177242

(57) **Abstract**

Disclosed is a chromatograph and a sample analysis method that can improve the separation resolution of each component while reducing the measurement time. A liquid analysis device (HPLC device) includes a main flow path (23) provided with a first buffer portion (12), a first switch valve (13), an HPLC column (14), a second switch valve (15), and a second buffer portion (16); and a bypass flow path (24) that bypasses the HPLC column (14). A control unit (32), by controlling a pump (11), the first switch valve (13), and the second switch valve (15), switches between a first path that allows at least a portion of a fluid held in the first buffer portion (12) to flow into the second buffer portion (16) through the main flow path (23) and a second path that allows a fluid held in the second buffer portion (16) to flow into the first buffer portion (12) through the bypass flow path (24) spanning between the first switch valve (13) and the second switch valve (15) in the main flow path (23).

## Description

### Technical Field

The present invention relates to chromatographs and sample analysis methods.

### Background Art

Conventionally, chromatographs are known as sample analysis devices that analyze components of a sample. Chromatography is an analysis method with which pressure is added to a mobile phase medium by a pump or the like to make the mobile phase medium pass through a column and an analyte is separated and detected with high performance by utilizing a difference in interaction between a stationary phase and a mobile phase. In analyzing a gas sample, gas chromatography or the like is used in which a gas called a carrier gas is used as a mobile phase medium. In analyzing a liquid sample, on the other hand, liquid chromatography or the like is used in which a liquid called an eluent is used as a mobile phase medium.

In order to improve the separation resolution of each component in a chromatograph, it is conceivable to increase the elution time of each component by increasing the length of a column served by a stationary phase or to dispose a plurality of columns in series within a flow path.

Increasing the length of a column or disposing a plurality of columns in series, however, leads to an increase in the size of the column itself. Such measures also lead to an increase in the size of a pump, since the feeding pressure for feeding a sample and a mobile phase medium into the column needs to be increased in accordance with the increase in the length of the column. In other words, the above measures lead to an increase in the size and cost of a sample analysis system including a chromatograph.

In this respect, Patent Literature Document 1 (JP-A-2006-201039), for example, discloses high-performance liquid chromatography (HPLC) employing a recycle separation method as a technique for improving the separation resolution without any increase in the feeding pressure. With this method, a liquid sample and an eluent that have once passed through an HPLC column are circulated together to pass through the same column a plurality of times, and thus the length of the HPLC column is increased simulatively to increase the separation resolution.

Making a liquid sample and an eluent pass through a single HPLC column a plurality of times in this manner can provide a separation resolution comparative to the separation resolution to be obtained when an HPLC column having a length equal to the total length of a plurality of HPLC columns or a length several times the length of a single column is used, while the feeding pressure remains comparative to that for a single HPLC column.

However, if this recycle operation is repeated using the recycle separation method described above, while components in a liquid sample gradually become separated, a component that is eluted quickly may catch up with another component that is eluted slowly and has been separated in a preceding cycle, and once-separated components may become mixed with each other.

To address such an issue, Patent Literature Document 2 (JP-A-2010-249588), for example, discloses a device configuration in which a closed flow path in a recycle operation is provided with a side path for increasing the length of that flow path. In other words, a buffer portion for holding a liquid sample and an eluent is provided in a closed flow path so that a component eluted first does not flow into a column until the last component to be eluted is eluted from the column. This configuration makes it possible to separate components with high accuracy even of a large amount of a liquid sample.

### Listing of References

### Patent Literature Documents

Patent Literature Document 1: JP-A-2006-201039
Patent Literature Document 2: JP-A-2010-249588

### Summary of Invention

### Problems to be solved by Invention

With the technique described in Patent Literature Document 2 (JP-A-2010-249588), by circulating a sample for recycle separation three times and detecting each component separated by the column in the fourth circulation, for example, virtually, a separation resolution comparative to that of a column that is four times as long can be obtained. In this case, however, a liquid sample and an eluent are fed to the column each time in a total liquid amount necessary for the final separation by the column. In other words, in the first, second, and third measurements, a liquid sample and an eluent are fed to the column in a liquid amount required for the measurement and in an additional liquid amount not required for the measurement. This produces an unnecessary measurement time.

Accordingly, the present invention is directed to providing a chromatograph and a sample analysis method that can improve the separation resolution of each component while reducing the measurement time.

### Solution to the Problem

To solve the above-described problems, a chromatograph according to one aspect of the present invention includes: a pump configured to send out a fluid including a sample, the sample being a liquid or a gas; a column configured to receive the fluid therein and separate components of the sample through interaction between the sample and a stationary phase held inside the column; a main flow path provided with, from one end side to an opposite end side (the other end side), a first buffer portion, a first switch valve, the column, a second switch valve, and a second buffer portion; a bypass flow path connected between the first switch valve and the second switch valve to bypass the column; a detector configured to detect the components separated by the column; and a control unit configured to control the pump, the first switch valve, and the second switch valve. The control unit is configured to be capable of switching a flow path between the first switch valve and the second switch valve in the main flow path to the bypass flow path by switching the first switch valve and the second switch valve, and by controlling the pump, the first switch valve, and the second switch valve, switch between a first path and a second path, the first path allowing at least a portion of the fluid held in the first buffer portion to flow into the second buffer portion through the main flow path, the second path allowing the fluid held in the second buffer portion to flow into the first buffer portion through the bypass flow path spanning between the first switch valve and the second switch valve in the main flow path.

In this manner, the first buffer portion and the second buffer portion are provided before and following the column, and the chromatograph is configured to be capable of switching between the first path that allows the fluid including the sample to flow into the second buffer portion from the first buffer portion through the first switch valve, the column, and the second switch valve and the second path that allows the fluid separated into components by the column to flow into the first buffer portion from the second buffer portion through the second switch valve and the first switch valve while bypassing the column. This configuration makes it possible to return the fluid that has once passed through the column to the first buffer portion and to allow the fluid to pass through the same column a plurality of times, and a recycle separation method can be achieved. Accordingly, the separation resolution can be improved without an increase in the size of the column and without an increase in the feeding pressure of the pump.

Furthermore, unlike a configuration in which a looped closed flow path is used as in a conventional recycle separation method, the above-described configuration allows the fluid to travel back and forth between the first buffer portion and the second buffer portion, and thus the fluid amount of the fluid introduced into the column can be kept to the fluid amount necessary for separation in the first to the (N-1)^{th} separation when the fluid is to pass through the column N times. In other words, fluid not necessary for separation can be kept from being fed in the first to the (N-1)^{th} separation, and the measurement time can be reduced.

In the above-described chromatograph, the detector may be disposed in the main flow path.

In this case, components separated by the column can be detected each time the fluid flows through the first path. For example, when the detector is disposed downstream from the column in the first path, separated components can be detected each time the fluid passes through the column. Moreover, since separated components can be detected each time from the fluid that has passed through the column, in a case where a completely separated peak can be detected while the number of times separation is performed is low, for example, a component can be identified or quantitated based on that peak.

In the above-described chromatograph, the detector may be disposed between the column and the second switch valve. In this case, separated components can be detected immediately after the fluid has passed through the column. Therefore, the fluid separated into components by the column can be kept from diffusing before being introduced into the detector, and the detection accuracy can be improved.

In the above-described chromatograph, the detector may be disposed outside the main flow path and the bypass flow path. In this case, separated components are not detected by the detector while the fluid is flowing through the first path or the second path, and separated components can be detected in the end, for example, after the recycle separation is completed. Since the fluid separated into components is not introduced unnecessarily into the detector, the detection accuracy can be improved.

The above-described chromatograph may further include a discharge flow path configured to discharge the fluid from a downstream side of the second buffer portion in the first path, and the detector may be disposed in the discharge flow path. In this case, separated components can be detected after recycle separation is completed and when the fluid is discharged from the downstream side of the second buffer portion.

The above-described chromatograph may further include a discharge flow path configured to discharge the fluid from between the column and the second buffer portion in the first path, and the detector may be disposed in the discharge flow path. In this case, separated components can be detected after recycle separation is completed and when the fluid is discharged from between the column and the second buffer portion. Since the fluid does not unnecessarily pass through the second buffer portion in the end, the fluid can be kept from diffusing, and the detection accuracy can be improved.

The above-described chromatograph may further include a second bypass flow path connected between the first switch valve and the second switch valve to bypass the column, and the detector may be disposed in the second bypass flow path. In this case, separated components can be detected by the detector at a desired timing, and then recycle separation can resume. For example, in accordance with the result of the detection by the detector, the remaining number of times recycle separation is performed can be determined, or recycle separation can be terminated.

The above-described chromatograph may further include a sample collecting flow path configured to collect the sample stored in a sample tank, and a mobile phase medium flow path configured to collect a mobile phase medium stored in a mobile phase medium tank. One end of the sample collecting flow path and one end of the mobile phase medium flow path may be connected to the first switch valve, the pump may be disposed upstream from the first buffer portion in the first path, and the control unit may be capable of switching between injection of the sample and injection of the mobile phase medium into the first buffer portion by controlling the pump and the first switch valve.

In this case, a single pump can double as a pump for injecting the sample and the mobile phase medium into the first buffer portion and a pump for sending out the fluid including the sample (a mixture of the sample and the mobile phase medium). Accordingly, the need for providing a plurality of pumps can be eliminated, and the size and the cost can be reduced accordingly. Moreover, the pump can be disposed outside the first path and the second path, and thus the fluid can be kept from passing through the pump during recycle separation. Accordingly, the fluid can be kept from dispersing, which could be caused if the fluid passes through the pump, and the resolution can be kept from decreasing.

In the above-described chromatograph, each of the first buffer portion and the second buffer portion may be a pipe conduit having a predetermined volume.

This configuration allows for a buffer portion that holds the fluid with a simple configuration. Moreover, as each buffer portion includes a pipe conduit, the fluid can be kept from diffusing in the buffer portions. In order to appropriately keep the fluid from diffusing, the smaller the inner diameter of the pipe conduit, the more preferable.

In the above-described chromatograph, the predetermined volume can be a capacity no smaller than a fluid amount necessary for the column to separate the components.

As the volume of the first buffer portion is set to a capacity no smaller than a fluid amount necessary for the column to separate components, the fluid can be supplied appropriately from the first buffer portion to the column in an amount necessary for separating components. Moreover, as the volume of the second buffer portion is set to a capacity no smaller than a fluid amount necessary for the column to separate components, the fluid that has passed through the column can be held in the second buffer portion until all the separation by the column is completed. Accordingly, recycle separation can be performed appropriately.

One mode of a sample analysis method according to the present invention is a sample analysis method for use in a chromatograph that includes a pump configured to send out a fluid including a sample, the sample being a liquid or a gas; a column configured to receive the fluid therein and separate components of the sample through interaction between the sample and a stationary phase held inside the column; a main flow path provided with, from one end side to an opposite end side (the other end side), a first buffer portion, a first switch valve, the column, a second switch valve, and a second buffer portion; a bypass flow path connected between the first switch valve and the second switch valve to bypass the column; and a detector configured to detect the components separated by the column, and the sample analysis method includes: a separation step of supplying at least a portion of the fluid held in the first buffer portion to the column via the first switch valve in the main flow path and separating components of the sample by the column; a holding step of supplying the fluid that has passed through the column to the second buffer portion via the second switch valve in the main flow path and holding the fluid in the second buffer portion; a collection step of, by controlling the first switch valve and the second switch valve, switching a flow path between the first switch valve and the second switch valve in the main flow path to the bypass flow path and returning the fluid held in the second buffer portion to the first buffer portion via, sequentially, the second switch valve and the first switch valve with the fluid bypassing the column; and a detection step of repeating the separation step, the holding step, and the collection step and performing detection by the detector after at least the separation step has been performed N times (N is an integer greater than 1). The separation step of an n^{th} instance (n is an integer satisfying 1 ≤ n ≤ N) includes supplying the fluid from the first buffer portion to the column in a fluid amount n times a fluid amount necessary for the column to separate the components in the separation step of a first instance.

In this manner, by performing the separation step, the holding step, and the collection step, the fluid that has once passed through the column can be returned to the first buffer portion, and repeating these steps can achieve a recycle separation method. Accordingly, the separation resolution can be improved.

Furthermore, since the fluid is supplied from the first buffer portion to the column in a fluid amount n times the fluid amount necessary for the column to separate components in the first separation, unlike a case where a looped closed flow path is used as in a conventional recycle separation method, fluid that is not necessary for separation can be kept from being sent out in the first to the (N-1)^{th} separation. Accordingly, the measurement time can be reduced.

The detection step of the sample analysis method may include performing the detection by the detector each time the separation step is performed. In this case, if a completely separated peak is detected while the number of times separation is performed is low, for example, the component can be identified or quantitated based on that peak.

The detection step of the sample analysis method may include performing the detection by the detector only after the separation step of the N^{th} instance. In this case, since the fluid separated into components is not introduced unnecessarily into the detector, the detection accuracy can be improved.

The detection step of the sample analysis method may include performing the detection by the detector after the separation step of an m^{th} instance (**m** is an integer satisfying 1 ≤ m < N). In other words, separated components can be detected by the detector at a desired timing before the N^{th} separation is performed. In this case, for example, in accordance with the result of the detection by the detector, the remaining number of times recycle separation is performed can be determined, or recycle separation can be terminated.

### Advantageous Effects of Invention

The present invention can improve the separation resolution of each component while reducing the measurement time in a measurement using chromatography.

Objects, modes, and advantageous effects of the present invention described above as well as objects, modes, and advantageous effects of the present invention not described above will be understood by those skilled in the art from the following description of the modes of implementing the invention (detailed description of the invention) by referring to the accompanying drawings and claims.

### Brief Description of Drawings

Fig. 1 illustrates an example of a structure of a liquid analysis device according to a first embodiment.
Fig. 2A illustrates an example of an operation of the liquid analysis device according to the first embodiment.
Fig. 2B illustrates an example of an operation of the liquid analysis device according to the first embodiment.
Fig. 2C illustrates an example of an operation of the liquid analysis device according to the first embodiment.
Fig. 3A illustrates an example of an operation of the liquid analysis device according to the first embodiment.
Fig. 3B illustrates an example of an operation of the liquid analysis device according to the first embodiment.
Fig. 4A illustrates an example of an operation of the liquid analysis device according to the first embodiment.
Fig. 4B illustrates an example of an operation of the liquid analysis device according to the first embodiment.
Fig. 4C illustrates an example of an operation of the liquid analysis device according to the first embodiment.
Fig. 5 illustrates an example of a structure of a liquid analysis device according to a second embodiment.
Fig. 6A illustrates an example of an operation of the liquid analysis device according to the second embodiment.
Fig. 6B illustrates an example of an operation of the liquid analysis device according to the second embodiment.
Fig. 6C illustrates an example of an operation of the liquid analysis device according to the second embodiment.
Fig. 7 illustrates an example of an operation of the liquid analysis device according to the second embodiment.
Fig. 8 illustrates an example of a structure of a liquid analysis device according to a third embodiment.
Fig. 9A illustrates an example of an operation of the liquid analysis device according to the third embodiment.
Fig. 9B illustrates an example of an operation of the liquid analysis device according to the third embodiment.
Fig. 9C illustrates an example of an operation of the liquid analysis device according to the third embodiment.
Fig. 10 illustrates an example of an operation of the liquid analysis device according to the third embodiment.
Fig. 11 illustrates an example of a structure of a liquid analysis device according to a fourth embodiment.
Fig. 12A illustrates an example of an operation of the liquid analysis device according to the fourth embodiment.
Fig. 12B illustrates an example of an operation of the liquid analysis device according to the fourth embodiment.
Fig. 12C illustrates an example of an operation of the liquid analysis device according to the fourth embodiment.
Fig. 13A illustrates an example of an operation of the liquid analysis device according to the fourth embodiment.
Fig. 13B illustrates an example of an operation of the liquid analysis device according to the fourth embodiment.
Fig. 13C illustrates an example of an operation of the liquid analysis device according to the fourth embodiment.
Fig. 14A illustrates a modification example of an operation of the liquid analysis device according to the fourth embodiment.
Fig. 14B illustrates an example of an operation of the liquid analysis device according to the fourth embodiment.
Fig. 15A illustrates a modification example of an operation of the liquid analysis device according to the fourth embodiment.
Fig. 15B illustrates an example of an operation of the liquid analysis device according to the fourth embodiment.
Fig. 16 is an illustration for describing an example of a basic configuration of a liquid analysis system.
Fig. 17 is an illustration for describing an example of a basic configuration of a liquid analysis system.
Fig. 18 illustrates an example of a structure of a conventional liquid analysis device.
Fig. 19 illustrates an example of a signal obtained from a detector.
Fig. 20 illustrates an example of a structure of a liquid analysis device of a conventional recycle separation method.
Fig. 21 is an illustration for describing a problem of a conventional liquid analysis device.
Fig. 22 illustrates an example of a structure of a gas analysis device according to an embodiment of the present invention.

### Description of Embodiments

As a measure against terrorism, a pandemic, or the like, for example, an analysis system that employs liquid chromatography or gas chromatography is used as a detection system for early detection of a target, such as a poison gas, an explosive, or an infectious disease, or used as a system for grasping a situation based on information analyzed at a plurality of sites for the purpose of preventing the spread of the aforementioned target. It is desired that an analysis device in such a system be small and can be installed at any installation location, such as a public facility or a transportation facility.

An analysis for inspection for a poison gas or an explosive can be done through a combination of liquid chromatography and a collection device that dissolves a gas in a liquid. Moreover, a poison gas or an explosive can be analyzed directly through gas chromatography.

Examples of such poison gases include sarin (C₄H₁₀FO₂), soman (C₇H₁₆FO₂P), VX gas (C₁₁H₂₆NO₂PS), and mustard gas (bis(2-chloroethyl) sulfide, C₄H₈Cₗ₂S), and examples of explosives include TNT (trinitrotoluene) and DNT (dinitrotoluene).

In infectious disease inspection, RNA or DNA of a target pathogen or a virus serving as a target can be analyzed directly through liquid chromatography or through liquid chromatography involving a sensitization method, such as a PCR or LAMP method, a hybridization method, or an intercalator method.

Examples of the infectious diseases include anthrax, avian influenza, Crimean-Congo hemorrhagic fever, dengue fever, Ebola hemorrhagic fever, Hendra virus infection, hepatitis, influenza, Lassa fever, Marburg fever, Meningococcal disease, Nipah virus infection, plague, Rift Valley fever, severe acute respiratory syndrome (SARS), smallpox, rabbit fever, and yellow fever.

Hereinafter, some embodiments of the present invention will be described with reference to the drawings.

### First Embodiment

Described according to the present embodiment is a liquid analysis system that includes a high-performance liquid chromatography (HPLC) device serving as a chromatograph that analyzes components of a liquid sample.

Aside from the examples mentioned above, examples of liquid analysis systems include a system that monitors the quality of drinking water or the like at a manufacturing factory of drinking water or the like or a system that, at a plant factory, analyzes components of a nutrient solution in which nutriments necessary for a plant (produce such as vegetables) have dissolved in water.

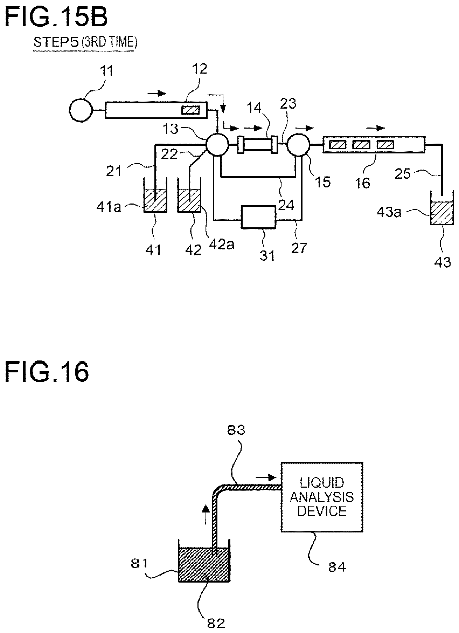

Fig. 16 illustrates an example of a liquid analysis system in a manufacturing factory of drinking water or the like.

As illustrated in Fig. 16, in a manufacturing factory of drinking water or the like, a portion of a liquid 82, such as drinking water, to be analyzed is collected from a liquid tank 81 storing the drinking water or the like, in order to monitor the quality of the drinking water or the like being manufactured. Then, the collected liquid 82 is fed to a liquid analysis device 84 through a liquid sample collecting flow path 83 and subjected to a component analysis by the liquid analysis device 84.

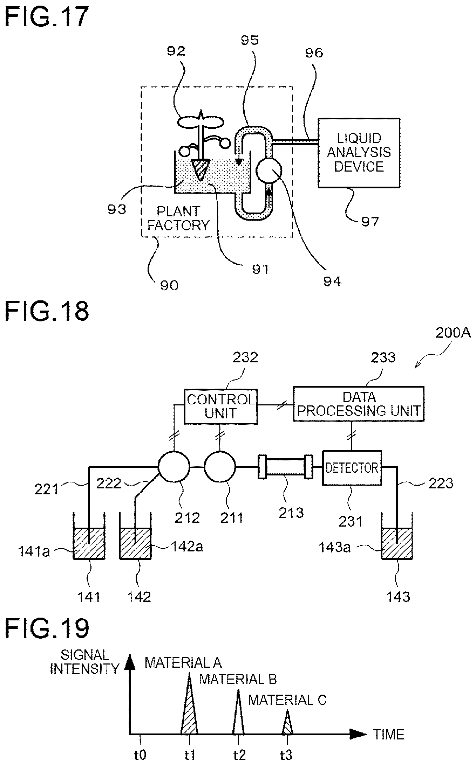

Fig. 17 illustrates an example of a liquid analysis system in a plant factory.

Typically, a plant factory employs hydroponics by use of a nutrient solution in which nutriments necessary for a plant (produce such as vegetables) are dissolved in water. Fig. 17 illustrates, as hydroponics, an example of circulation-type hydroponics in which a nutrient solution 91 is circulated.

As illustrated in Fig. 17, the nutrient solution 91 supplied to a cultivation tank 93 in which produce 92 is grown is circulated through a circulation flow path 95 by a liquid feeding pump 94. A portion of the circulating nutrient solution 91 is, for example, collected automatically via a liquid sample collecting flow path 96 branching off from a portion of the circulation flow path 95, and the collected nutrient solution 91 is subjected to a component analysis by a liquid analysis device 97.

In a case of circulation-type hydroponics, the composition of the nutrient solution held in the cultivation tank changes as the nutrient solution circulates. The growth of a plant is affected by the components of a nutrient solution, and thus the nutrient solution is adjusted as necessary and as appropriate based on the result of analyzing the nutrient solution.

For the liquid analysis device 84 or 97, an HPLC device that can easily analyze multitudinous components included in a liquid sample can be used.

Fig. 18 illustrates an example of a configuration of a conventional HPLC device 200A.

The HPLC device 200A includes a pump 211, a switch valve 212, and an HPLC column 213. A control unit 232, by controlling an operation of the pump 211 and the switch valve 212, introduces a liquid sample 141a stored in a sample tank 141 (corresponding to the liquid tank 81 of Fig. 16 or the cultivation tank 93 of Fig. 17) and an eluent 142a stored in an eluent tank 142 into the HPLC column 213 via, respectively, a liquid sample collecting flow path 221 and an eluent flow path 222.

The liquid sample 141a introduced into the HPLC column 213 is separated into constituting components by the HPLC column 213. Then, the separated components are detected by a detector 231, the detection data from the detector 231 is analyzed by a data processing unit 233, and the components of the nutrient solution are identified or quantitated. The result of the analysis by the data processing unit 233 is sent, for example, to the control unit 232.

The liquid sample 141a and the eluent 142a that have passed through the HPLC column 213 and the detector 231 flow into a waste liquid tank 143 through a waste liquid flow path 223 and are held in the waste liquid tank 143 as a waste liquid 143a.

When the liquid sample 141a flows through the HPLC column 213 along with the eluent 142a, components of the liquid sample 141a move while interacting with the HPLC column 213 of a stationary phase. The time it takes for each component to elute from the HPLC column 213 is determined by the difference in the intensity of interaction between each component and the HPLC column 213. In other words, by use of the difference in the elution time of components passing through the HPLC column 213, the components included in the liquid sample 141a are separated.

The separated components are detected by the detector 231. At this point, the detector 231 detects a signal corresponding to each component in accordance with a holding time of each component in the HPLC column 213. In other words, signals corresponding to these components are each time-dependent. Herein, the holding time is a length of time from when a component flows into the HPLC column 213 and elutes from the HPLC column 213 to when the component is detected by the detector 231.

For example, when a liquid sample 141a includes a substance A, a substance B, and a substance C and when the holding times of the substance A, the substance B, and the substance C passing through the HPLC column 231 are t1, t2, and t3 (t1 < t2 < t3), signals corresponding to the respective components (the substance A, the substance B, and the substance C) are obtained from the detector 231, as illustrated in Fig. 19.

However, depending on a sample, components may not be separated sufficiently when a sample has passed through an HPLC column only once. Therefore, in order to improve the separation resolution of each component, an HPLC device that employs a recycle separation method has conventionally been proposed.

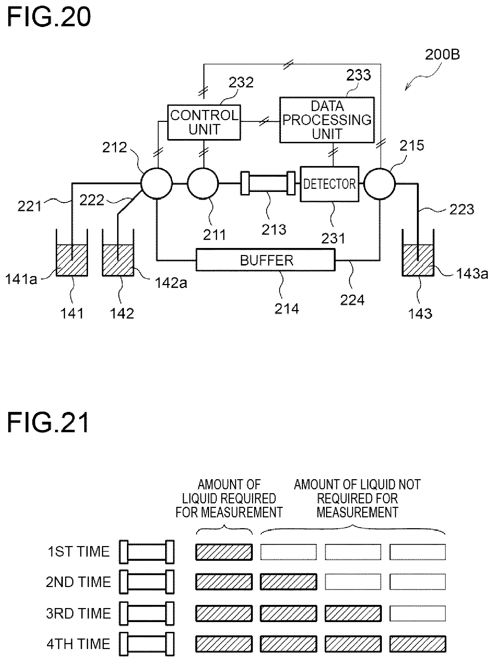

Fig. 20 illustrates an example of a structure of an HPLC device 200B that employs a conventional recycle separation method. Elements identical to those of the HPLC device 200A illustrated in Fig. 18 are given reference signs identical to those in Fig. 18, and the following description centers on the differences in configuration.

The HPLC device 200B illustrated in Fig. 20 is an HPLC device where a recycle separation method is applied to the HPLC device 200A illustrated in Fig. 18, and a second switch valve 215 is added downstream from the detector 231. As the switch valve 212 and the second switch valve 215 are controlled, a circulation path (closed flow path) 224 where a liquid circulates through the switch valve 212, the pump 211, the HPLC column 213, the detector 231, the second switch valve 215, and a buffer portion 214 can be formed.

By circulating the liquid sample 141a and the eluent 142a through the circulation path 224 to allow the liquid sample 141a and the eluent 142a to pass through the HPLC column 213 a plurality of times, the length of the HPLC column 213 can be increased simulatively to increase the separation resolution.

In a case where circulation for recycle separation is performed three times, for example, the liquid sample 141a and the eluent 142a flow through the HPLC column 213 four times. With this configuration, as compared to a case with no circulation, the separation resolution comparative to the one to be obtained when an HPLC column 213 four times as long is used can be obtained virtually.

In this conventional HPLC device 200B, in each of the first, second, and third measurements, the liquid sample 141a and the eluent 142a are fed to the HPLC column 213 in a liquid amount the same as that in the fourth measurement. Herein, in the fourth measurement, as compared to the case with no circulation, the liquid sample 141a and the eluent 142a are required in a total liquid amount four times the total liquid amount necessary for the separation by the HPLC column 213.

In other words, as illustrated in Fig. 21, in the first, second, and third measurements, the liquid sample 141a and the eluent 142a are fed to the HPLC column 213 in a liquid amount required for the measurement and in an additional liquid amount not required for the measurement. This produces an unnecessary measurement time. For example, in the case of the first measurement, as illustrated in Fig. 21, the total liquid amount of the liquid sample 141a and the eluent 142a not required for the measurement is three times the total liquid amount of the liquid sample 141a and the eluent 142a required for the measurement, and this leads to the measurement time that is four times the necessary measurement time.

An HPLC device according to the present embodiment is an HPLC device employing a recycle separation method in which, when separation is performed N times (N is an integer no smaller than 2), the total amount of a liquid sample and an eluent introduced into an HPLC column in the first to the (N-1)^{th} separation is kept to a necessary amount to reduce the measurement time.

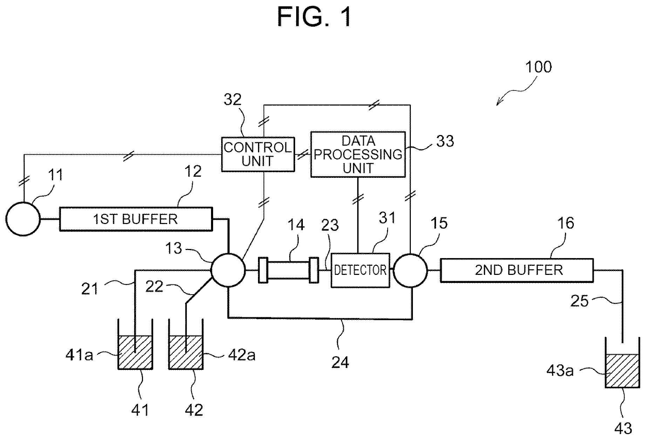

Fig. 1 illustrates an example of a configuration of a liquid analysis system that includes a liquid analysis device (HPLC device) 100 according to the present embodiment.

The HPLC device 100 includes, in the listed order, a pump 11, a first buffer portion 12, a first switch valve 13, an HPLC column 14 (corresponding to a column according to the present invention), a second switch valve 15, and a second buffer portion 16. The HPLC device 100 further includes a liquid sample collecting flow path 21 (corresponding to a sample collecting flow path according to the present invention), an eluent flow path 22 (corresponding to a mobile phase medium flow path according to the present invention), a main flow path 23, a bypass flow path 24, and a waste liquid flow path 25 (corresponding to a discharge flow path according to the present invention). The HPLC device 100 further includes a detector 31, a control unit 32, and a data processing unit 33.

The liquid sample collecting flow path 21 is a flow path for introducing a liquid sample 41a from a sample tank 41 into the HPLC column 14, and the eluent flow path 22 is a flow path for introducing an eluent 42a (corresponding to a mobile phase medium according to the present invention) from an eluent tank 42 (corresponding to a mobile phase medium tank according to the present invention) into the HPLC column 14. One end of the liquid sample collecting flow path 21 and one end of the eluent flow path 22 are connected to the first switch valve 13.

The main flow path 23 is a flow path that is provided with, from its one end side to the other end side (opposite end side), the first buffer portion 12, the first switch valve 13, the HPLC column 14, the second switch valve 15, and the second buffer portion 16, and a fluid including the liquid sample 41a (a mixed liquid of the liquid sample 41a and the eluent 42a) flows through the main flow path 23. Herein, each of the first buffer portion 12 and the second buffer portion 16 includes, for example, a pipe conduit (tube) having a predetermined volume. This pipe conduit (tube) may, for example, have a coil-like form.

The bypass flow path 24 is a flow path connected between the first switch valve 13 and the second switch valve 15. The bypass flow path 24 bypasses the HPLC column 14 and has one end connected to the first switch valve 13 and the other end connected to the second switch valve 15.

The waste liquid flow path 25 is a flow path for discharging a fluid in the flow path within the liquid analysis system into a waste liquid tank 43 as a waste liquid 43a.

The pump 11 is a liquid feeder for feeding the liquid sample 41a and/or the eluent 42a into the HPLC column 14 and is connected to the HPLC column 14 with the first switch valve 13 and the first buffer portion 12 interposed therebetween.

The detector 31 is provided between the HPLC column 14 and the second switch valve 15 in the main flow path 23.

The liquid sample 41a received in the HPLC column 14 is separated into constituting components through interaction between the liquid sample 41a and a stationary phase held inside the HPLC column 14. The detector 31 detects components separated by the HPLC column 14 and sends detected detection data to the data processing unit 33.

The data processing unit 33 analyzes the detection data detected by the detector 31 and identifies or quantitates components in the nutrient solution. The data processing unit 33 sends an analyzed analysis result to the control unit 32.

The control unit 32 controls an operation of the pump 11, the first switch valve 13, or the second switch valve 15. By switching the first switch valve 13 and the second switch valve 15, the control unit 32 can switch the flow path between the first switch valve 13 and the second switch valve 15 in the main flow path 23 to the bypass flow path 24. Moreover, by controlling the pump 11, the control unit 32 can switch the direction in which a fluid flows in the flow path within the liquid analysis system.

Furthermore, the control unit 32 can receive an analysis result analyzed by the data processing unit 33 and transmit the analysis result to the outside as necessary or display the result on a monitor or the like (not illustrated).

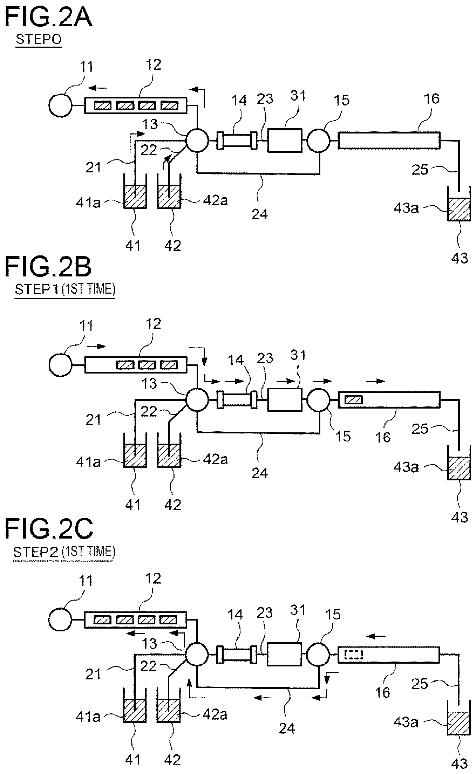

Now, an example of an operation of the liquid analysis system according to the present embodiment will be described with reference to Figs. 2A to 4C. In this operation example, components included in a liquid sample are separated N times (four times in this example) by the HPLC column 14, and the separated components are detected each time.

### [STEP 0: Preparation]

First, the control unit 32 illustrated in Fig. 1 fills the main flow path 23 and the bypass flow path 24 with the eluent 42a from the eluent tank 42 by controlling the pump 11, the first switch valve 13, and the second switch valve 15.

Specifically, the control unit 32 switches the first switch valve 13, sucks up the eluent 42a from the eluent tank 42 by controlling the pump 11, and supplies the sucked up eluent 42a to the first buffer portion 12. Next, the control unit 32 switches the first switch valve 13 and the second switch valve 15 and, by controlling the pump 11, sends the eluent 42a held in the first buffer portion 12 toward the HPLC column 14. This eluent 42a fills the HPLC column 14, the detector 31, and a portion of the second buffer portion 16. Next, the control unit 32 switches the first switch valve 13 and the second switch valve 15 and, by controlling the pump 11, sends the eluent 42a held in the first buffer portion 12 toward the bypass flow path 24.

In this manner, the eluent 42a fills the bypass flow path 24 and the main flow path 23 including a portion of the first buffer portion 12, the HPLC column 14, the detector 31, and a portion of the second buffer portion 16.

Thereafter, the control unit 32 switches the first switch valve 13, sucks up the liquid sample 41a from the sample tank 41 by controlling the pump 11, and supplies the sucked up liquid sample 41a to the first buffer portion 12.

Herein, the amount of the mixed liquid of the eluent 42a and the liquid sample 41a supplied to the first buffer portion 12 is adjusted such that the liquid amount of the mixed liquid of the eluent 42a and the liquid sample 41a held in the first buffer portion 12 is no smaller than a liquid amount necessary for separating components by an HPLC column having a length equivalent to the total length of N HPLC columns 14 (four HPLC columns 14 in this example) or a length N times the length of the HPLC column 14 (four times in this example).

In Fig. 2A, the amount of the mixed liquid supplied to the first buffer portion 12 is four times the flow amount necessary for a single HPLC column 14 to separate components in the first separation.

### [STEP 1: First Separation]

The control unit 32, by controlling the first switch valve 13 and the second switch valve 15, connects the first buffer portion 12 and the HPLC column 14 and connects the detector 31 and the second buffer portion 16. Then, the control unit 32 drives the pump 11 and supplies a portion of the fluid (the mixed liquid of the eluent 42a and the liquid sample 41a) held in the first buffer portion 12 toward the HPLC column 14. Thus, the fluid held in the first buffer portion 12 is introduced into the HPLC column 14.

At this point, the fluid is sent out from the first buffer portion 12 and supplied to the HPLC column 14 in a liquid amount necessary for the single HPLC column 14 to separate components in the first separation.

When the liquid sample 41a along with the eluent 42a flows through the HPLC column 14, components of the liquid sample 41a move while interacting with the HPLC column 14 of a stationary phase. The time it takes for each component to elute from the HPLC column 14 is determined by the difference in the intensity of interaction between each component and the HPLC column 14. In other words, by use of the elution time of each component passing through the HPLC column 14, components included in the liquid sample 41a are separated.

Then, the separated components are detected by the detector 31 disposed following the HPLC column 14. At this point, the detector 31 obtains signals corresponding to the respective components in accordance with the elution time of each component eluted from the HPLC column 14.

The fluid discharged from the detector 31 is supplied to the second buffer portion 16 via the second switch valve 15 and held in the second buffer portion 16. At this point, components are supplied to the second buffer portion 16 in order of shorter elution time from the HPLC column 14 (in the order in which the components are eluded).

The second buffer portion 16 holds the fluid passing through the HPLC column 14 and the detector 31 until the first separation and measurement of all components (detection of each component) is completed. In other words, as illustrated in Fig. 2B, the fluid is sent out from the first buffer portion 12 in a liquid amount necessary for the single HPLC column 14 to separate components in the first separation, and this fluid passes through the HPLC column 14 and the detector 31 and is then held in the second buffer portion 16.

In this manner, the path of the fluid in the separation step takes a first path that runs sequentially from the first buffer portion 12, to the first switch valve 13, to the HPLC column 14, and to the second switch valve 15 and runs into the second buffer portion 16.

In order to keep the fluid that has flowed into the second buffer portion 16 from at least partially flowing into the waste liquid tank 43 through the waste liquid flow path 25 in the separation step, a third switch valve may be provided between the second buffer portion 16 and the waste liquid flow path 25. In this case, the third switch valve is controlled by the control unit 32 such that the third switch valve opens or closes a flow path connecting the second buffer portion 16 and the waste liquid flow path 25.

### [STEP 2: First Collection]

The control unit 32, by controlling the first switch valve 13 and the second switch valve 15, connects the first buffer portion 12 and the second buffer portion 16 via the bypass flow path 24. Then, the control unit 32 drives the pump 11 and returns the fluid held in the second buffer portion 16 to the first buffer portion 12 through the bypass flow path 24, as illustrated in Fig. 2C.

At this point, the fluid is sent out from the second buffer portion 16 and supplied to the first buffer portion 12 in a liquid amount equal to the liquid amount in which the fluid has been supplied from the first buffer portion 12 to the second buffer portion 16 at STEP 1 (first separation step) (the liquid amount necessary for the single HPLC column 14 to separate components in the first separation).

The fluid sent from the second buffer portion 16 flows out of the second buffer portion 16 through an inlet through which the fluid has entered the second buffer portion 16 in the above-described separation step. In other words, the fluid is sent out of the second buffer portion 16 such that the portion of the fluid that has entered the second buffer portion 16 first in the separation step is sent out last, and the components are returned to the first buffer portion 12 in order of longer elution time from the HPLC column 14. The fluid that is returned to the first buffer portion 12 at this point flows into the first buffer portion 12 through an outlet through which the fluid has flowed out of the first buffer portion 12 in the separation step.

In this manner, the path of the fluid in the collection step takes a second path that runs sequentially from the second buffer portion 16 to the second switch valve 15 to the first switch valve 13, bypassing the HPLC column 14, and runs into the first buffer portion 12.

### [STEP 3: Second Separation]

Like STEP 1, the control unit 32, by controlling the pump 11, the first switch valve 13, and the second switch valve 15, supplies the mixed liquid of the eluent 42a and the liquid sample 41a held in the first buffer portion 12 toward the HPLC column 14.

Since this is the second separation, the fluid is sent out from the first buffer portion 12 and supplied to the HPLC column 14 at this point in a liquid amount two times the liquid amount necessary at the first separation step.

Then, like the first measurement at STEP 1, components included in the liquid sample are separated by the HPLC column 14, and the separated components are detected by the detector 31.

This second measurement at STEP 3 is a measurement substantially comparative to the one obtained when two HPLC columns 14 used in the first measurement are disposed in series or when an HPLC column having a length two times the length of the HPLC column 14 used in the first measurement is used. Therefore, the separation resolution of signals corresponding to the respective components is higher than that in the first measurement (STEP 1).

The fluid discharged from the detector 31 is supplied to the second buffer portion 16 via the second switch valve 15 and held in the second buffer portion 16.

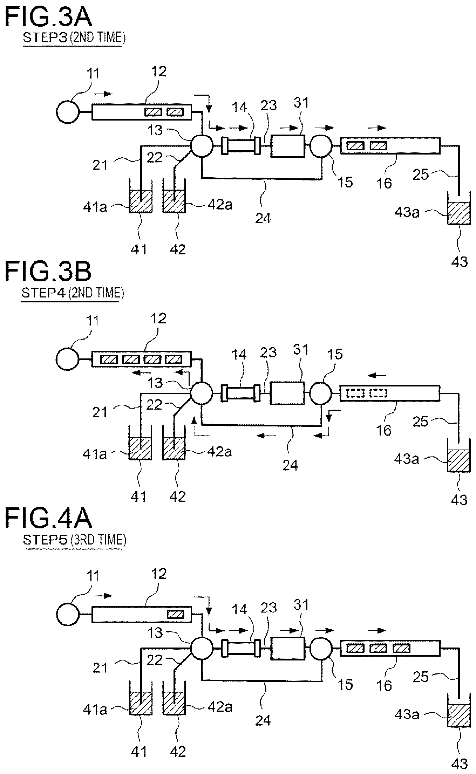

The second buffer portion 16 holds the fluid passing through the HPLC column 14 and the detector 31 until the second separation and measurement of all components (detection of each component) is completed. In other words, as illustrated in Fig. 3A, the fluid is sent out from the first buffer portion 12 in a liquid amount two times the liquid amount necessary at the first separation step, and this fluid passes through the HPLC column 14 and the detector 31 and is then held in the second buffer portion 16.

### [STEP 4: Second Collection]

Like STEP 2, the control unit 32, by controlling the pump 11, the first switch valve 13, and the second switch valve 15, connects the first buffer portion 12 and the second buffer portion 16 via the bypass flow path 24. Then, the control unit 32 drives the pump 11 and returns the fluid held in the second buffer portion 16 to the first buffer portion 12 through the bypass flow path 24, as illustrated in Fig. 3B.

In other words, the fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 3 (second separation step).

### [STEP 5: Third Separation]

With procedures similar to those at STEP 1 or STEP 3, the mixed liquid of the eluent 42a and the liquid sample 41a held in the first buffer portion 12 is supplied toward the HPLC column 14.

Since this is the third separation, the fluid is sent out from the first buffer portion 12 and supplied to the HPLC column 14 at this point in a liquid amount three times the liquid amount necessary at the first separation step.

Once the mixed liquid is received in the HPLC column 14, components included in the liquid sample are separated by the HPLC column 14, and the separated components are detected by the detector 31. The separation resolution of signals corresponding to the respective components at this point is higher than the separation resolution in the first measurement (STEP 1) and in the second measurement (STEP 3).

Then, the fluid discharged from the detector 31 is supplied to the second buffer portion 16 via the second switch valve 15 and held in the second buffer portion 16. The second buffer portion 16 holds the fluid passing through the HPLC column 14 and the detector 31 until the third separation and measurement of all components (detection of each component) is completed. In other words, as illustrated in Fig. 4A, the fluid is sent out from the first buffer portion 12 in a liquid amount three times the liquid amount necessary at the first separation step, and this fluid passes through the HPLC column 14 and the detector 31 and is then held in the second buffer portion 16.

### [STEP 6: Third Collection]

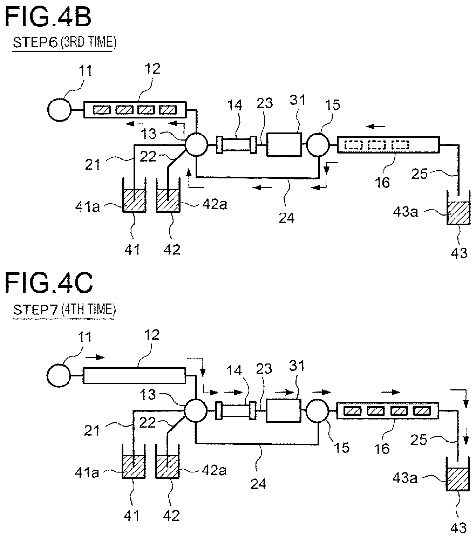

Like STEP 2 or STEP 4, the control unit 32, by controlling the pump 11, the first switch valve 13, and the second switch valve 15, connects the first buffer portion 12 and the second buffer portion 16 via the bypass flow path 24. Then, the control unit 32 drives the pump 11 and returns the fluid held in the second buffer portion 16 to the first buffer portion 12 through the bypass flow path 24, as illustrated in Fig. 4B.

In other words, the fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 5 (third separation step).

### [STEP 7: Fourth Separation]

With procedures similar to those at STEP 1, STEP 3, or STEP 5, the mixed liquid of the eluent 42a and the liquid sample 41a held in the first buffer portion 12 is supplied toward the HPLC column 14.

Since this is the fourth separation, the fluid is sent out from the first buffer portion 12 and supplied to the HPLC column 14 at this point in a liquid amount four times the liquid amount necessary at the first separation step.

Once the mixed liquid is supplied to the HPLC column 14, components included in the liquid sample are separated by the HPLC column 14, and the separated components are detected by the detector 31. The separation resolution of signals corresponding to the respective components at this point is higher than the separation resolution in the first measurement (STEP 1), in the second measurement (STEP 3), and in the third measurement (STEP 5).

Then, the fluid discharged from the detector 31 is supplied to the second buffer portion 16 via the second switch valve 15, discharged from the second buffer portion 16 to the waste liquid tank 43 through the waste liquid flow path 25, and held in the waste liquid tank 43 as a waste liquid 43a. In other words, as illustrated in Fig. 4C, the fluid is sent out from the first buffer portion 12 in a liquid amount four times the liquid amount necessary at the first separation step, and this fluid passes through the HPLC column 14, the detector 31, and the second buffer portion 16 and is then held in the waste liquid tank 43.

In this manner, at the final separation step, the fluid flows from the first buffer portion 12 to the second buffer portion 16 in the main flow path 23 and is then discharged through the waste liquid flow path 25.

In a case where a residual liquid in the flow path within the liquid analysis system is discharged as well, the residual liquid is discharged into the waste liquid tank 43 via the second buffer portion 16 and the waste liquid flow path 25.

The case where the separation step is performed four times has been described according to the present embodiment, but the number of times the separation step is performed is not limited to the above-described example. The number of times the separation step is performed can be set as appropriate in accordance with a substance to be detected. This point applies the same to the following embodiments.

As described above, the HPLC device 100 of this embodiment includes the main flow path 23 and the bypass flow path 24. The main flow path 23 is provided with, from its one end side to the other end side, the first buffer portion 12, the first switch valve 13, the HPLC column 14, the second switch valve 15, and the second buffer portion 16. The bypass flow path 24 is connected between the first switch valve 12 and the second switch valve 15 such that the bypass flow path 24 bypasses the HPLC column 14. The HPLC device 100 further includes the detector 31 and the control unit 32. The detector 31 detects components separated by the HPLC column 14, and the control unit 32 controls the pump 11, the first switch valve 13, and the second switch valve 15.

The control unit 32, by switching the first switch valve 13 and the second switch valve 15, can switch the flow path between the first switch valve 13 and the second switch valve 15 in the main flow path 23 to the bypass flow path 24. By controlling the pump 11, the first switch valve 13, and the second switch valve 15, the control unit 32 can switch between a first path and a second path. The first path allows at least a portion of a fluid (a mixed liquid of a liquid sample 41a and an eluent 42a) held in the first buffer portion 12 to flow into the second buffer portion 16 through the main flow path 23, and the second path allows a fluid held in the second buffer portion 16 to flow into the first buffer portion 12 through the bypass flow path 24 spanning between the first switch valve 13 and the second switch valve 15 in the main flow path 23.

To be more specific, the HPLC device 100 performs a separation step in which, after performing a preparation of supplying a liquid sample 41a to the first buffer portion 12 with an eluent 42a filling the bypass flow path 24 and the main flow path 23 including a portion of the first buffer portion 12, the HPLC column 14, the detector 31, and a portion of the second buffer portion 16, the HPLC device 100 supplies at least a portion of the fluid held in the first buffer portion 12 to the HPLC column 14 via the first switch valve 13 in the main flow path 23 and separates components of the liquid sample by the HPLC column 14.

Then, the HPLC device 100 performs a holding step of supplying the fluid that has passed through the HPLC column 14 to the second buffer portion 16 via the second switch valve 15 in the main flow path 23 and holding the fluid in the second buffer portion 16.

Then, the HPLC device 100 performs a collection step of, by controlling the first switch valve 13 and the second switch valve 15, switching a flow path between the first switch valve 13 and the second switch valve 15 in the main flow path 23 to the bypass flow path 24 and returning the fluid held in the second buffer portion 16 to the first buffer portion 12 through, sequentially, the second switch valve 15 and the first switch valve 13 with the fluid bypassing the HPLC column 14.

After repeating the separation step, the holding step, and the collection step and performing at least the separation step N times (N is an integer greater than 1), the HPLC device 100 performs detection by the detector 31 (detection step).

In the n^{th} separation step (**n** is an integer satisfying 1 ≤ n ≤ N), the fluid is supplied from the first buffer portion 12 to the HPLC column 14 in a liquid amount n times the liquid amount necessary for the column to separate components in the first separation step.

In this manner, the first buffer portion 12 and the second buffer portion 16 are provided, respectively, before and following the column, and the HPLC device 100 is configured to be capable of switching between the first path that allows a fluid including the liquid sample 41a to flow into the second buffer portion 16 from the first buffer portion 12 through the HPLC column 14 and the second path that allows the fluid separated into components by the HPLC column 14 to flow into the first buffer portion 12 from the second buffer portion 16 while bypassing the HPLC column 14. This configuration makes it possible to return the fluid that has once passed through the HPLC column 14 to the first buffer portion 12 and to allow the fluid to pass through the same HPLC column 14 a plurality of times, and this in turn can achieve a recycle separation method. Accordingly, the separation resolution can be improved with a single short column. Moreover, the above-described configuration allows for the use of a low-pressure pump 11, and the cost can thus be reduced.

Furthermore, unlike a configuration in which a looped closed flow path is used as in a conventional recycle separation method, recycle separation is achieved by switching the direction of flow of the fluid (the head and the tail) between the first path and the second path.

Specifically, the fluid that has flowed out of the first buffer portion 12 through its predetermined outlet and passed through the HPLC column 14 flows into the second buffer portion 16 through its predetermined inlet and held in the second buffer portion 16. Then, the fluid that flows out of the second buffer portion 16 flows out of the second buffer portion 16 through the aforementioned inlet and flows into the first buffer portion 12 through the aforementioned outlet while bypassing the HPLC column 14. In other words, a liquid sample separated by components into, for example, substances A, B, C in this order by the HPLC column 14 flows into the second buffer portion 16 through its inlet in order of the substances A, B, and C and is temporarily held in the second buffer portion 16. Then, this liquid sample flows out of the second buffer portion 16 through its inlet in order of the substances C, B, and A, and the substances C, B, and A are collected in this order into the first buffer portion 12 via the aforementioned outlet. This configuration allows the liquid sample to flow out of the first buffer portion 12 in order of the substances A, B, and C in the next separation step, and the substances A, B, and C can be supplied to the HPLC column 14 again in this order.

According to the present embodiment, the configuration in which a fluid travels back and forth between the first buffer portion 12 and the second buffer portion 16 as described above can limit the liquid amount of the fluid to be introduced into the HPLC column 14 to a liquid amount necessary for separation in the first to the (N-1)^{th} separation when the fluid is to pass through the HPLC column 14 N times. In other words, fluid not necessary for separation can be prevented from being fed in the first to the (N-1)^{th} separation, and the measurement time can be reduced.

For example, in a case where the separation is performed four times by the HPLC column 14, in the first measurement, the measurement time can be reduced to one-fourth of the measurement time needed in a conventional recycle separation method illustrated in Fig. 21.

One end of the liquid sample collecting flow path 21 and one end of the eluent flow path 22 are connected to the first switch valve 13, and the pump 11 is disposed upstream from the first buffer portion 13 in the first path 23. The control unit 32 can switch between injection of a liquid sample 41a and injection of an eluent 42a into the first buffer portion 12 by controlling the pump 11 and the first switch valve 13.

In this manner, the single pump 11 can achieve both injection of the liquid sample 41a or the eluent 42a into the first buffer portion 12 and feeding of a mixed liquid of the liquid sample 41a and the eluent 42a into the HPLC column 14. Accordingly, the need for providing a plurality of pumps can be eliminated, and the size and the cost can be reduced accordingly. Moreover, the pump 11 can be disposed outside the first path and the second path, and thus the fluid can be kept from passing through the pump 11 during recycle separation. Accordingly, the fluid can be kept from dispersing, which could be caused if the fluid passes through the pump 11, and the resolution can be kept from decreasing.

The first buffer portion 12 and the second buffer portion 16 can each be a pipe conduit having a predetermined volume. This configuration allows for a buffer portion that holds a fluid with a simple configuration. Moreover, as each buffer portion is constituted by a pipe conduit, a fluid can be kept from diffusing in the buffer portions.

The aforementioned predetermined volume can be a capacity no smaller than a liquid amount necessary for the HPLC column 14 to separate components. This makes it possible to supply a fluid appropriately from the first buffer portion 12 to the HPLC column 14 in a liquid amount necessary for component separation. Moreover, the fluid that has passed through the HPLC column 14 can be held appropriately in the second buffer portion 16 until the HPLC column 14 completes separation of all the components. Accordingly, recycle separation can be performed appropriately.

Furthermore, since the detector 31 is disposed between the HPLC column 14 and the second switch valve 15, separated components can be detected each time the fluid passes through the HPLC column 14. In addition, since separated components can be detected immediately after the fluid has passed through the HPLC column 14, the separated components can be detected by the detector 31 before the fluid separated into components by the HPLC column 14 diffuses. Accordingly, the detection accuracy can be improved.

The shape of a peak of a detection signal detected by the detector becomes broader with an increase in the number of times separation is performed. Therefore, in a case where a completely separated peak can be detected while the number of times separation is performed is low, for example, a high-accuracy analysis is possible if the component is identified or quantitated based on that peak.

For example, in a case where components (fertilizer components) in a culture fluid are analyzed with the culture fluid used for hydroponics serving as a liquid sample, among sodium (Na), ammonia (nitrogen: NH4), magnesium (Mg), calcium (Ca), and potassium (K) each serving as a fertilizer component, potassium (K) takes more time to elute from the HPLC column 14 than the other components. Therefore, a completely separated peak may be obtained even through a single instance of separation, depending on the length of the HPLC column 14. In such a case, potassium (K) may be analyzed in the first detection.

In this embodiment, the detector 31 is disposed between the HPLC column 14 and the second switch valve 15. The detector 31, however, does not necessarily have to be disposed downstream from the HPLC column 14 in the first path. It suffices that the detector 31 can detect a fluid that has passed through the HPLC column 14 and that the detector 31 be disposed in the main flow path 23. The detector 31 may be disposed, for example, between the first switch valve 13 and the HPLC column 14.

As described above, the HPLC device 100 according to the present embodiment is a liquid analysis device that employs liquid chromatography and can improve the separation resolution of each component while reducing the measurement time.

### Second Embodiment

Next, a second embodiment according to the present invention will be described.

In the first embodiment, components are detected by the detector 31 each time the components included in a liquid sample 41a are separated by the HPLC column 14. For example, in a case where separation is performed four times by the HPLC column 14, the detector 31 detects components four times.

According to the second embodiment, in a case where separation is performed a plurality of times by the HPLC column 14, components separated by the HPLC column 14 in the final separation are detected by the detector 31. For example, in a case where separation is performed four times by the HPLC column 14, the detector 31 detects only the components of a liquid sample 41a separated by the HPLC column 14 in the fourth separation. In other words, the detector 31 does not perform component detection (measurement) in up to the third separation step.

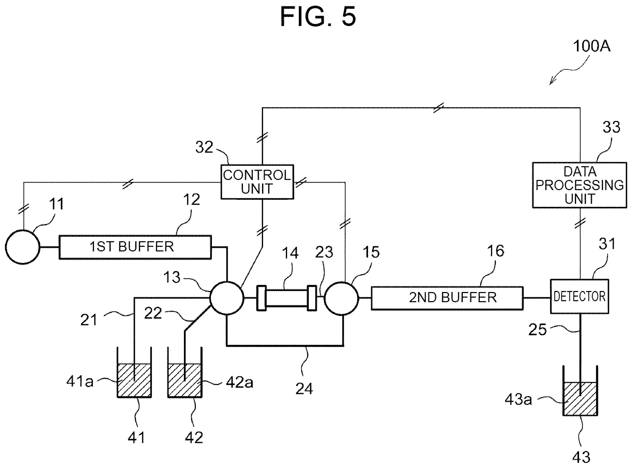

Fig. 5 illustrates an example of a configuration of a liquid analysis system that includes a liquid analysis device (HPLC device) 100A according to the present embodiment. In Fig. 5, elements identical to those of the HPLC device 100 illustrated in Fig. 1 are given reference signs identical to those in Fig. 1, and the following description centers on the differences in configuration.

In the HPLC device 100A according to the present embodiment, the detector 31 is provided between the second buffer portion 16 and the waste liquid tank 43 in the waste liquid flow path 25. In other words, one end of the HPLC column 14 is connected directly to the first switch valve 13, and the other end of the HPLC column 14 is connected directly to the second switch valve 15.

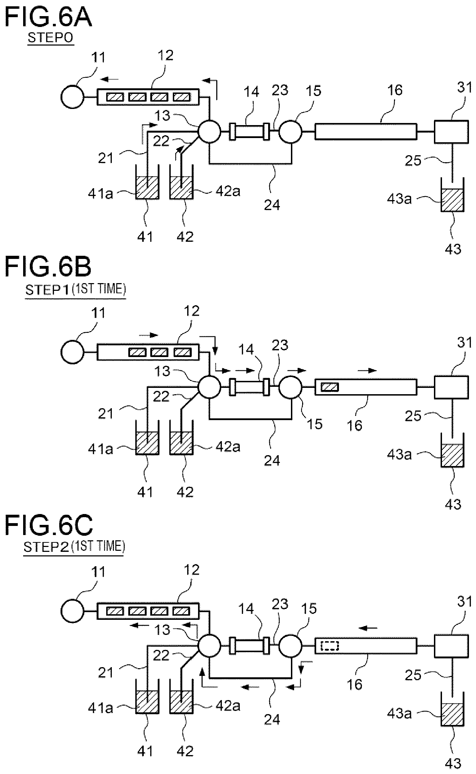

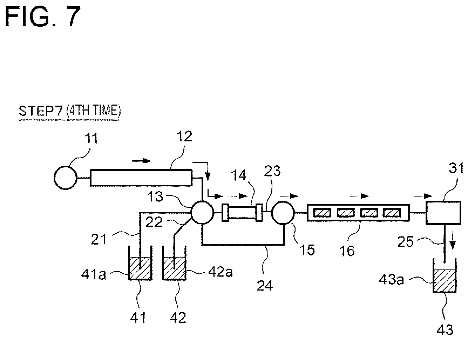

Now, an example of an operation of the liquid analysis system according to the present embodiment will be described with reference to Figs. 6A to 6C and Fig. 7. In this operation example, components included in a liquid sample are separated N times (four times in this example) by the HPLC column 14, and separated components are detected after the final separation (fourth separation).

### [STEP 0: Preparation]

First, like STEP 0 according to the first embodiment, the control unit 32 illustrated in Fig. 5 fills the main flow path 23 and the bypass flow path 24 with an eluent 42a from the eluent tank 42 by controlling the pump 11, the first switch valve 13, and the second switch valve 15. Thereafter, by controlling the pump 11 and the first switch valve 13, the control unit 32 supplies a liquid sample 41a collected from the sample tank 41 to the first buffer portion 12.

Herein, the amount of the mixed liquid of the eluent 42a and the liquid sample 41a supplied to the first buffer portion 12 is adjusted such that the liquid amount of the mixed liquid of the eluent 42a and the liquid sample 41a held in the first buffer portion 12 is no smaller than a liquid amount necessary for separating components by an HPLC column having a length equivalent to the total length of N HPLC columns 14 (four HPLC columns 14 in this example) or a length N times the length of the HPLC column 14 (four times in this example).

In Fig. 6A, the amount of the mixed liquid supplied to the first buffer portion 12 is four times the flow amount necessary for separating components by a single HPLC column 14 in the first separation.

### [STEP 1: First Separation]

The control unit 32, by controlling the first switch valve 13 and the second switch valve 15, connects the first buffer portion 12 and the HPLC column 14 and connects the HPLC column 14 and the second buffer portion 16. Then, the control unit 32 drives the pump 11 and supplies a portion of the fluid (the mixed liquid of the eluent 42a and the liquid sample 41a) held in the first buffer portion 12 toward the HPLC column 14. Thus, the fluid held in the first buffer portion 12 is introduced into the HPLC column 14.

The fluid is sent out from the first buffer portion 12 and supplied to the HPLC column 14 at this point in a liquid amount necessary for the single HPLC column 14 to separate components in the first separation.

The fluid that has passed through the HPLC column 14 is supplied to the second buffer portion 16 via the second switch valve 15 and held in the second buffer portion 16. At this point, like the separation step according to the first embodiment, components are supplied to the second buffer portion 16 in order of shorter elution time from the HPLC column 14 (in the order in which the components are eluded).

The second buffer portion 16 holds the fluid passing through the HPLC column 14 until the first separation of all components is completed. In other words, as illustrated in Fig. 6B, the fluid is sent out from the first buffer portion 12 in a flow amount necessary for the single HPLC column 14 to separate components in the first separation, and this fluid passes through the HPLC column 14 and is then held in the second buffer portion 16.

In this manner, the path of the fluid in the separation step takes a first path that runs sequentially from the first buffer portion 12, to the first switch valve 13, to the HPLC column 14, and to the second switch valve 15 and runs into the second buffer portion 16.

In order to keep the fluid that has flowed into the second buffer portion 16 from at least partially flowing into the detector 31 in the separation step, a third switch valve may be provided between the second buffer portion 16 and the detector 31. In this case, the third switch valve is controlled by the control unit 32 such that the third switch valve opens or closes a flow path connecting the second buffer portion 16 and the detector 31.

### [STEP 2: First Collection]

The control unit 32, by controlling the first switch valve 13 and the second switch valve 15, connects the first buffer portion 12 and the second buffer portion 16 via the bypass flow path 24. Then, the control unit 32 drives the pump 11 and returns the fluid held in the second buffer portion 16 to the first buffer portion 12 through the bypass flow path 24, as illustrated in Fig. 6C.

The fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 1 (first separation step) (the flow amount necessary for the single HPLC column 14 to separate components in the first separation). Herein, like the separation step according to the first embodiment, the fluid is sent out from the second buffer portion 16 such that the portion of the fluid that has entered the second buffer portion 16 first in the separation step is sent out last, and the components are returned to the first buffer portion 12 in order of longer elution time from the HPLC column 14.

In this manner, the path of the fluid in the collection step takes a second path that runs sequentially from the second buffer portion 16 to the second switch valve 15 to the first switch valve 13, bypassing the HPLC column 14, and runs into the first buffer portion 12.

### [STEP 3: Second Separation]

The procedures at STEP 1 are repeated. Since this is the second separation, the fluid is sent out from the first buffer portion 12 and supplied to the HPLC column 14 at this point in a liquid amount two times the liquid amount necessary at the first separation step.

### [STEP 4: Second Collection]

The procedures at STEP 2 are repeated. The fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 3 (second separation step).

### [STEP 5: Third Separation]

The procedures at STEP 1 are repeated. Since this is the third separation, the fluid is sent out from the first buffer portion 12 and supplied to the HPLC column 14 at this point in a liquid amount three times the liquid amount necessary at the first separation step.

### [STEP 6: Third Collection]

The procedures at STEP 2 are repeated. The fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 5 (third separation step).

### [STEP 7: Fourth Separation]

With procedures similar to those at STEP 1, STEP 3, or STEP 5, the fluid held in the first buffer portion 12 is supplied toward the HPLC column 14. Since this is the fourth separation, the fluid is sent out from the first buffer portion 12 and supplied to the HPLC column 14 at this point in a liquid amount four times the liquid amount necessary at the first separation step.

In this operation example, the fourth separation is the final separation. Therefore, the fluid that has passed through the HPLC column 14 is supplied to the second buffer portion 16 via the second switch valve 15 and is then supplied from the second buffer portion 16 to the detector 31.

Then, separated components are detected by the detector 31, detection data from the detector 31 is analyzed by the data processing unit 33 illustrated in Fig. 5, and the components in the nutrient solution are identified or quantitated. The result of the analysis by the data processing unit 33 is sent to the control unit 32.

The fluid discharged from the detector 31 is discharged to the waste liquid tank 43 through the waste liquid flow path 25 and is held in the waste liquid tank 43 as a waste liquid 43a. In other words, as illustrated in Fig. 7, the fluid is sent out from the first buffer portion 12 in a liquid amount four times the liquid amount necessary at the first separation step, and this fluid passes through the HPLC column 14, the second buffer portion 16, and the detector 31 and is discharged to the waste liquid tank 43.

In this manner, at the final separation step, the fluid flows from the first buffer portion 12 to the second buffer portion 16 in the main flow path 23, passes through the detector 31, and is discharged through the waste liquid flow path 25.

In a case where a residual liquid in the flow path within the liquid analysis system is discharged as well, the residual liquid is discharged into the waste liquid tank 43 through the second buffer portion 16 and the waste liquid flow path 25.

As described above, in the HPLC device 100A according to the present embodiment, the detector 31 is disposed outside the main flow path 23 and the bypass flow path 24. Specifically, the detector 31 is disposed in the waste liquid flow path 25 through which a fluid is discharged at the downstream side of the second buffer portion 16 in the first path.

Accordingly, the detector 31 does not detect any separated component while the fluid is flowing in the first path or the second path, and the detector 31 can detect separated components after recycle separation is completed and when the fluid is discharged at the downstream side of the second buffer portion 16. In this manner, the fluid separated into components by the HPLC column 14 can be kept from being introduced into the detector 31 during recycle separation.

The detector 31 has a certain capacity, and a fluid may diffuse inside the detector 31. As a fluid is allowed to pass through the detector 31 after the end of recycle separation as in the present embodiment, any influence of diffusion inside the detector 31 can be minimized, and the detection accuracy can be improved.

### Third Embodiment

Next, a third embodiment according to the present invention will be described.

According to the third embodiment, like the second embodiment, in a case where separation is performed a plurality of times by the HPLC column 14, components separated by the HPLC column 14 in the final separation are detected by the detector 31. For example, in a case where separation is performed four times by the HPLC column 14, the detector 31 detects only components of a liquid sample 41a separated by the HPLC column 14 in the fourth separation. In other words, the detector 31 does not perform component detection (measurement) in up to the third separation step.

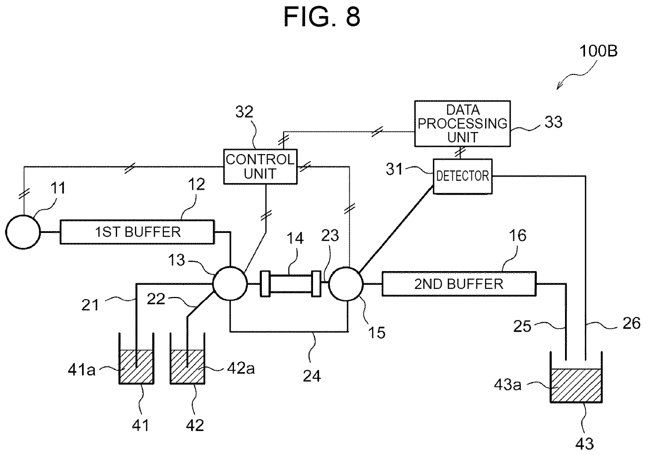

Fig. 8 illustrates an example of a configuration of a liquid analysis system that includes a liquid analysis device (HPLC device) 100B according to the present embodiment. In Fig. 8, elements identical to those of the HPLC device 100A illustrated in Fig. 5 are given reference signs identical to those in Fig. 5, and the following description centers on the differences in configuration.

In the HPLC device 100B according to the present embodiment, the detector 31 is provided between the second switch valve 15 and the waste liquid tank 43 in a waste liquid flow path 26. In other words, the second switch valve 15 is connected to the second buffer portion 16 and the detector 31.

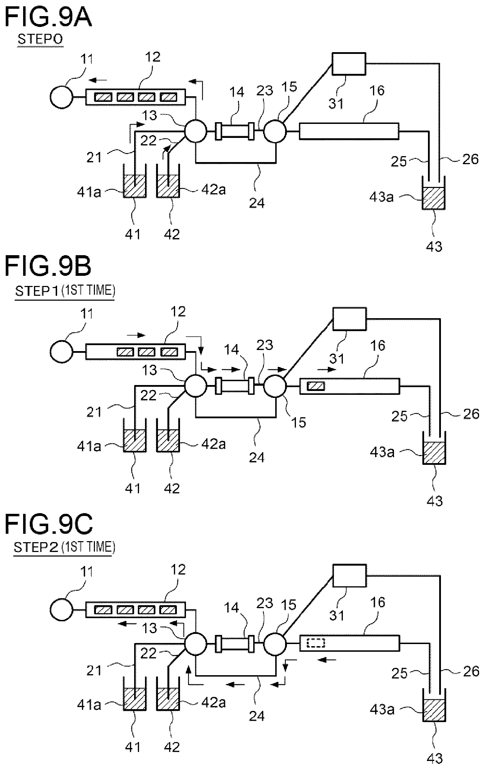

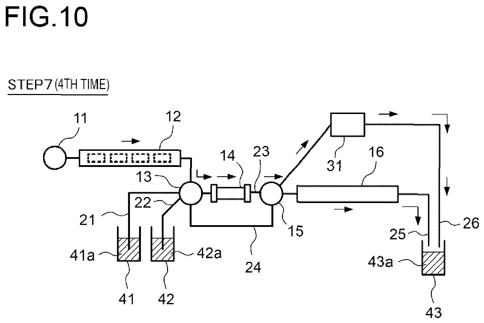

Now, an example of an operation of the liquid analysis system according to the present embodiment will be described with reference to Figs. 9A to 9C and Fig. 10. In this operation example, components included in a liquid sample are separated N times (four times in this example) by the HPLC column 14, and after the final separation (the fourth separation), the fluid that has passed through the HPLC column 14 is fed to the detector 31 via the second switch valve 15, and separated components are detected by the detector 31.

Fig. 9A illustrates an operation at the preparation step at [STEP 0], Fig. 9B illustrates an operation at the first separation step at [STEP 1], and Fig. 9C illustrates an operation at the first collection step at [STEP 2]. The operation of the liquid analysis system according to the present embodiment is identical to the operation of the liquid analysis system according to the second embodiment from the preparation step at [STEP 0] to the third collection step at [STEP 6], and thus description thereof will be omitted herein.

In order to keep the fluid that has flowed into the second buffer portion 16 from at least partially flowing into the waste liquid tank 43 through the waste liquid flow path 25 in the separation step, a third switch valve may be provided between the second buffer portion 16 and the waste liquid flow path 25. In this case, the third switch valve is controlled by the control unit 32 such that the third switch valve opens or closes a flow path connecting the second buffer portion 16 and the waste liquid flow path 25.

### [STEP 7: Fourth Separation]

With procedures similar to those at STEP 1, STEP 3, or STEP 5, the fluid held in the first buffer portion 12 is supplied toward the HPLC column 14. Since this is the fourth separation, the fluid is sent out from the first buffer portion 12 and supplied to the HPLC column 14 at this point in a liquid amount four times the liquid amount necessary at the first separation step.

In this operation example, the fourth separation is the final separation. Therefore, the control unit 32 supplies the fluid that has passed through the HPLC column 14 to the detector 31 by controlling the second switch valve 15.

Then, separated components are detected by the detector 31, detection data from the detector 31 is analyzed by the data processing unit 33 illustrated in Fig. 8, and the components in the nutrient solution are identified or quantitated. The result of the analysis by the data processing unit 33 is sent to the control unit 32.

The fluid discharged from the detector 31 is discharged to the waste liquid tank 43 through the waste liquid flow path 26 and is held in the waste liquid tank 43 as a waste liquid 43a. In other words, as illustrated in Fig. 10, the fluid is sent out from the first buffer portion 12 in a liquid amount four times the liquid amount necessary at the first separation step, and this fluid passes through the HPLC column 14 and the detector 31 and is then held in the waste liquid tank 43.

In this manner, at the final separation step, the fluid flows from the first buffer portion 12 to the second switch valve 15 in the main flow path 23, passes through the detector 31 without passing through the second buffer portion 16, and is discharged through the waste liquid flow path 25.

In a case where a residual liquid in the flow path within the liquid analysis system is discharged, the residual liquid is discharged into the waste liquid tank 43 through the second buffer portion 16 and the waste liquid flow path 25.

As described above, in the HPLC device 100B according to the present embodiment, the detector 31 is disposed in the waste liquid flow path 26 through which the fluid is discharged via the second switch valve 15 provided between the HPLC column 14 and the second buffer portion 16 in the first path.

Accordingly, like the second embodiment, the fluid can be made to pass through the detector 31 after the end of recycle separation, and thus any influence of diffusion inside the detector 31 can be minimized.

Furthermore, according to the present embodiment, since separated components can be detected when the fluid is discharged at a location downstream from the HPLC column 14 and upstream from the second buffer portion 16 after recycle separation has been completed, the fluid does not unnecessarily pass through the second buffer portion 16 in the end. In other words, since separated components can be detected immediately following the HPLC column 14, any influence of diffusion inside the second buffer portion 16 can be suppressed, and the detection accuracy can be further improved.

Moreover, the second buffer portion 16 is a pipe conduit having a predetermined volume as described above, and the speed of the fluid passing through the second buffer portion 16 is very low. According to the present embodiment, since components can be detected by the detector 31 without passing through the second buffer portion 16 after recycle separation has been completed, the measurement time can be reduced greatly as compared with the second embodiment in which components are detected by the detector 31 after having passed through the second buffer portion 16.

### Fourth Embodiment

Next, a fourth embodiment according to the present invention will be described.

According to this embodiment, if separation is performed a plurality of times by the HPLC column 14, components separated by the HPLC column 14 in the final separation are detected by the detector 31. This is similar to the second embodiment and the third embodiment. For example, in a case where separation is performed four times by the HPLC column 14, the detector 31 detects only components of a liquid sample 41a separated by the HPLC column 14 in the fourth separation. In other words, the detector 31 does not perform component detection (measurement) in up to the third separation step.

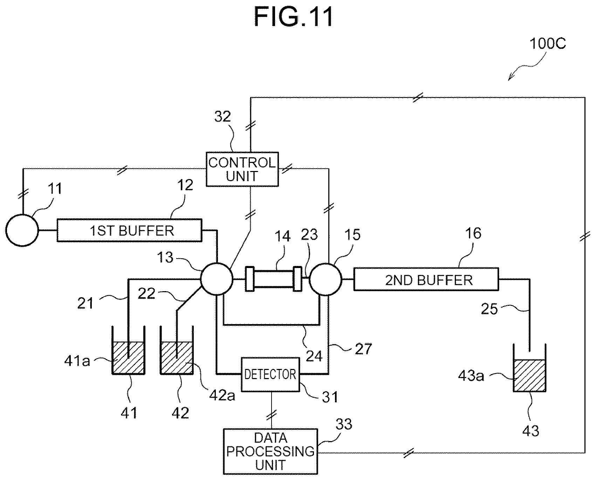

Fig. 11 illustrates an example of a configuration of a liquid analysis system that includes a liquid analysis device (HPLC device) 100C according to the present embodiment. In Fig. 11, elements identical to those of the HPLC device 100A illustrated in Fig. 5 are given reference signs identical to those in Fig. 5, and the following description centers on the differences in configuration.

In the HPLC device 100C according to the present embodiment, the detector 31 is provided in a detection flow path 27. The detection flow path 27 is a second bypass flow path provided parallel to the bypass flow path 24. One end (pipe conduit through which a fluid flows into the detector 31) of the detection flow path 27 is connected to the first switch valve 13, and the other end (pipe conduit through which a fluid flows out of the detector 31) of the detection flow path 27 is connected to the second switch valve 15.

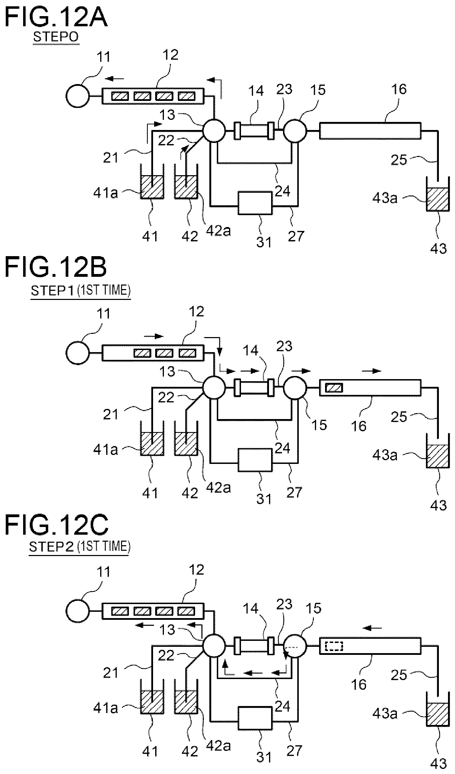

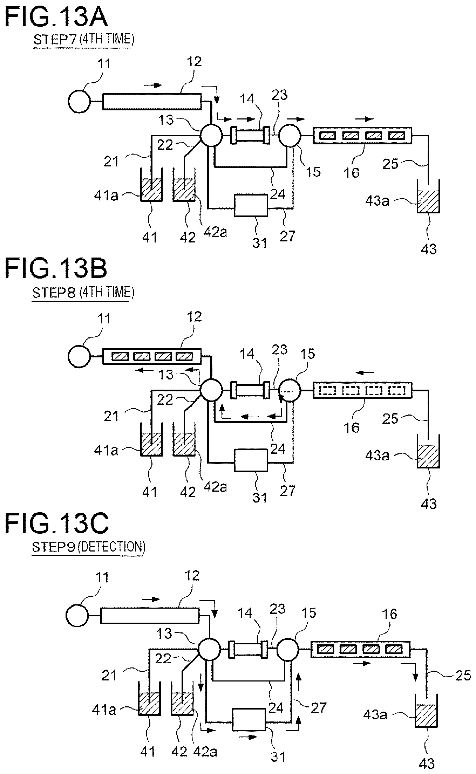

Now, an example of an operation of the liquid analysis system according to the present embodiment will be described with reference to Figs. 12A to 12C and Figs. 13A to 13C. In this operation example, components included in a liquid sample are separated N times (four times in this example) by the HPLC column 14.

According to the second embodiment, the fluid that has passed through the HPLC column 14 is fed to the detector 31 via the second switch valve 15 and the second buffer portion 16 after the final separation (fourth separation) by the HPLC column 14, and separated components are detected. According to the third embodiment, the fluid that has passed through the HPLC column 14 is fed to the detector 31 via the second switch valve 15 after the final separation (fourth separation) by the HPLC column 14, and separated components are detected.

According to the present embodiment, the fluid that has passed through the HPLC column 14 is temporarily returned to the first buffer portion 12 after the final separation (fourth separation) by the HPLC column 14, the fluid returned to the first buffer portion 12 is fed to the detector 31 via the first switch valve 13, and separated components are detected. Then, the fluid that has passed through the detector 31 passes through the second switch valve 15 and the second buffer portion 16 and is discharged through the waste liquid flow path 25.

Fig. 12A illustrates an operation at the preparation step at [STEP 0], Fig. 12B illustrates an operation at the first separation step at [STEP 1], and Fig. 12C illustrates an operation at the first collection step at [STEP 2]. The operation of the liquid analysis system according to the present embodiment is identical to the operation of the liquid analysis system according to the second embodiment from the preparation step at [STEP 0] to the third collection step at [STEP 6], and thus description thereof will be omitted herein.

### [STEP 7: Fourth Separation]

With procedures similar to those at STEP 1, STEP 3, or STEP 5, the fluid held in the first buffer portion 12 is supplied toward the HPLC column 14. Since this is the fourth separation, the fluid is sent out from the first buffer portion 12 and supplied to the HPLC column 14 at this point in a liquid amount four times the liquid amount necessary at the first separation step.

The fluid that has passed through the HPLC column 14 is supplied to the second buffer portion 16 via the second switch valve 15 and held in the second buffer portion 16. In other words, as illustrated in Fig. 13A, the fluid is sent out from the first buffer portion 12 in a liquid amount four times the liquid amount necessary at the first separation step, and this fluid passes through the HPLC column 14 and is held in the second buffer portion 16.

### [STEP 8: Fourth Collection]

With procedures similar to those at STEP 2, STEP 4, or STEP 6, the fluid held in the second buffer portion 16 is returned to the first buffer portion 12. The fluid is sent out from the second buffer portion 16 and supplied to the first buffer portion 12 at this point in a liquid amount equal to the liquid amount in which the fluid has been supplied from the first buffer portion 12 to the second buffer portion 16 at STEP 7 (fourth separation step), as illustrated in Fig. 13B.

In order to keep the fluid that has flowed into the second buffer portion 16 from at least partially flowing into the waste liquid tank 43 via the waste liquid flow path 25 at the separation step, a third switch valve may be provided between the second buffer portion 16 and the waste liquid flow path 25. In this case, the third switch valve is controlled by the control unit 32 such that the third switch valve opens or closes a flow path connecting the second buffer portion 16 and the waste liquid flow path 25.

### [STEP 9: Detection]

The control unit 32, by controlling the pump 11, the first switch valve 13, and the second switch valve 15, supplies the mixed liquid of the eluent 42a and the liquid sample 41a held in the first buffer portion 12 toward the detector 31 (the detection flow path 27).

Thus, separated components are detected by the detector 31, detection data from the detector 31 is analyzed by the data processing unit 33 illustrated in Fig. 11, and the components in the nutrient solution are identified or quantitated. The result of the analysis by the data processing unit 33 is sent to the control unit 32.

The fluid discharged from the detector 31 passes through the second buffer portion 16, is discharged to the waste liquid tank 43 through the waste liquid flow path 25, and is held in the waste liquid tank 43 as a waste liquid 43a. In other words, as illustrated in Fig. 13C, the fluid is sent out from the first buffer portion 12 in a liquid amount four times the liquid amount necessary at the first separation step, and this fluid passes through the detector 31 and the second buffer portion 16 and is then held in the waste liquid tank 43.

In a case where a residual liquid in the flow path within the liquid analysis system is discharged, the residual liquid is discharged into the waste liquid tank 43 through the second buffer portion 16 and the waste liquid flow path 25.

As described above, in the HPLC device 100C according to the present embodiment, the detector 31 is disposed in the detection flow path 27 serving as a second bypass flow path connected between the first switch valve 13 and the second switch valve 15 and bypassing the HPLC column 14.

Accordingly, like the second embodiment or the third embodiment, the fluid can be made to pass through the detector 31 after the end of recycle separation, and thus any influence of diffusion inside the detector 31 can be minimized.

### Modification to Fourth Embodiment

In the fourth embodiment, the fluid that has passed through the HPLC column 14 is temporarily returned to the first buffer portion 12 after the final separation by the HPLC column 14, and the fluid returned to the first buffer portion 12 is then fed to the detector 31 to detect the separated components. Alternatively, separated components of a liquid sample may be detected by the detector 31 before the final separation is performed by the HPLC column 14.

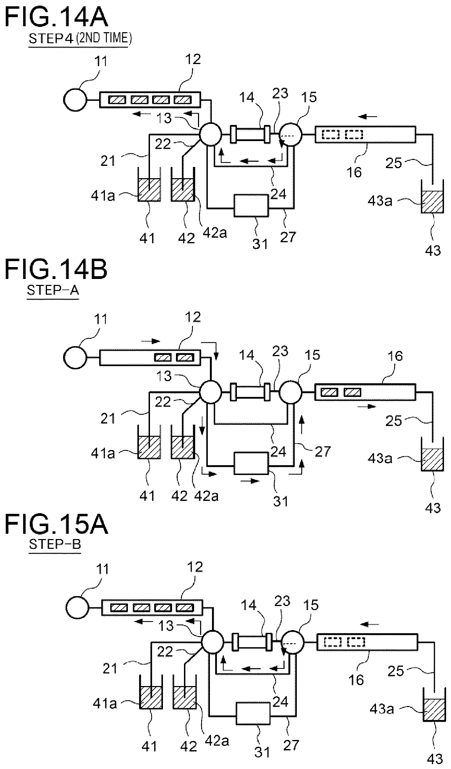

For example, the second collection step may be performed after the second separation by the HPLC column 14, as illustrated in Fig. 14A, and the fluid may be returned to the first buffer portion 12. Thereafter, separated components may be detected by the detector 31 before the third separation by the HPLC column 14. In this case, a detection step (STEP-A) illustrated in Fig. 14B is inserted after the second collection step illustrated in Fig. 14A.

### [STEP-A: Detection]

The control unit 32, by controlling the pump 11, the first switch valve 13, and the second switch valve 15, supplies the mixed liquid of the eluent 42a and the liquid sample 41a held in the first buffer portion 12 toward the detector 31.

Thus, separated components are detected by the detector 31, and detection data from the detector 31 is analyzed by the data processing unit 33 illustrated in Fig. 11, and the components in the nutrient solution are identified or quantitated. The result of the analysis by the data processing unit 33 is sent to the control unit 32.

The fluid discharged from the detector 31 is held in the second buffer portion 16. Since this is after the second separation, the fluid is sent out from the first buffer portion 12 and supplied to the detector 31 at this point in a liquid amount two times the liquid amount necessary at the first separation step (Fig. 14B).

### [STEP-B: Collection]

After STEP-A (detection step), the control unit 32, by controlling the pump 11, the first switch valve 13, and the second switch valve 15, returns the mixed liquid of the eluent 42a and the liquid sample 41a held in the second buffer portion 16 toward the first buffer portion 12. The fluid is sent out from the second buffer portion 16 and supplied to the first buffer portion 12 at this point in a liquid amount equal to the liquid amount in which the fluid has been supplied from the first buffer portion 12 to the second buffer portion 16 at STEP-A (detection step) (Fig. 15A).

Thereafter, when the separation step resumes, the control unit 32 performs the third separation step at [STEP 5] illustrated in Fig. 15B. Procedures thereafter are similar to those according to the fourth embodiment.

In this manner, separated components can be detected by the detector 31 at a desired timing, and then recycle separation can resume.

Accordingly, for example, in accordance with the result of detection by the detector 31, the remaining number of times recycle separation is performed can be determined, or recycle separation can be terminated. In other words, the remaining number of times recycle separation is performed can be increased if it is determined that component separation is not sufficient based on the result of detection by the detector 31, or recycle separation can be terminated as there is no need to resume recycle separation if it is determined that components have been separated sufficiently. In this manner, the number of times separation is performed can be changed while considering the result of analysis.

The foregoing embodiments pertain to chromatographs that analyze components of a liquid sample, the present invention is not limited thereto. An embodiment of the present invention may provide a gas analysis system that includes a gas chromatography device as a chromatograph that analyzes components of a gas sample.

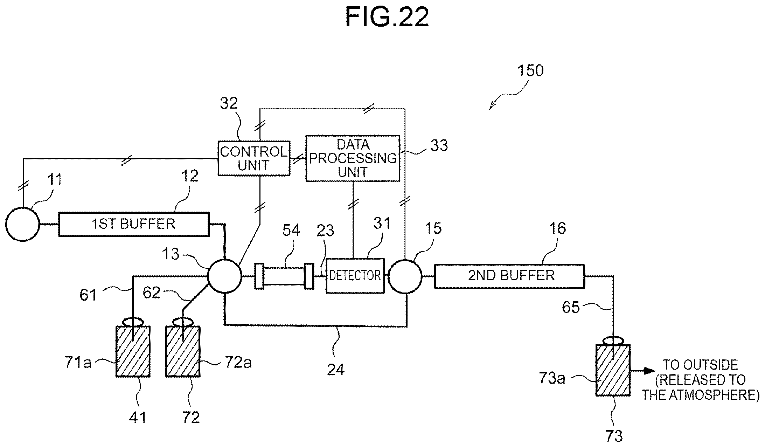

Fig. 22 illustrates an example of a configuration of a gas analysis system that includes a gas analysis device (GC device) 150 according to an embodiment of the present invention.

The configuration example of the gas analysis system illustrated in Fig. 22 is a configuration of the liquid analysis system illustrated in Fig. 1 reconfigured for analyzing a gas, and elements given reference signs identical to those illustrated in Fig. 1 are equivalent elements.

The GC device 150 includes, in the listed order, a pump 11, a first buffer portion 12, a first switch valve 13, a GC column 54 (corresponding to a column according to the present invention), a second switch valve 15, and a second buffer portion 16. The GC device 150 further includes a gas sample collecting flow path 61 (corresponding to a sample collecting flow path according to the present invention), a carrier gas flow path 62 (corresponding to a mobile phase medium flow path according to the present invention), a main flow path 23, a bypass flow path 24, and a waste gas flow path 65 (corresponding to a discharge flow path according to the present invention). The GC device 150 further includes a detector 31, a control unit 32, and a data processing unit 33.

The gas sample collecting flow path 61 is a flow path for introducing a gas sample 71a stored in a sample tank 41 into the GC column 54, and the carrier gas flow path 62 is a flow path for introducing a carrier gas 72a (corresponding to a mobile phase medium according to the present invention) stored in a carrier gas tank 72 (corresponding to a mobile phase medium tank according to the present invention) into the GC column 54. One end of the gas sample collecting flow path 61 and one end of the carrier gas flow path 62 are connected to the first switch valve 13.

The main flow path 23 is a flow path that is provided with, from its one end side to the other end side, the first buffer portion 12, the first switch valve 13, the GC column 54, the second switch valve 15, and the second buffer portion 16, and a fluid including the gas sample 71a (a mixed gas of the gas sample 71a and the carrier gas 72a) flows through the main flow path 23. Herein, each of the first buffer portion 12 and the second buffer portion 16 includes, for example, a pipe conduit (tube) having a predetermined volume. This pipe conduit (tube) may, for example, have a coil-like form.

The bypass flow path 24 is a flow path connected between the first switch valve 13 and the second switch valve 15. The bypass flow path 24 bypasses the GC column 54 and has one end connected to the first switch valve 13 and the other end connected to the second switch valve 15.

The waste gas flow path 65 is a flow path for discharging a fluid in the flow path within the gas analysis system to a detoxifying device 73 provided therein with a detoxifying substance 73a for detoxifying the fluid. The fluid (gas) detoxified by the detoxifying device 73 is discharged to the outside (released to the atmosphere).

In a case where the fluid in the flow path within the gas analysis system contains no toxic substance, this fluid, without going through the detoxifying device 73, is discharged to the outside (released to the atmosphere) from the second buffer portion 16 via its end portion opposite to its other end portion connected to the second switch valve 15.

The pump 11 is a feeder for feeding the gas sample 71a and/or the carrier gas 72a into the GC column 54 and is connected to the GC column 54 with the first switch valve 13 and the first buffer portion 12 interposed therebetween.

The detector 31 is provided between the GC column 54 and the second switch valve 15 in the main flow path 23.

The gas sample 71a introduced into the GC column 54 is separated into constituting components through interaction between the gas sample 71a and a stationary phase held inside the GC column 54. The detector 31 detects components separated by the GC column 54 and sends detected detection data to the data processing unit 33.

The data processing unit 33 analyzes the detection data detected by the detector 31 and identifies or quantitates the components of the gas sample. The data processing unit 33 sends analyzed analysis result to the control unit 32.

The control unit 32 controls an operation of the pump 11, the first switch valve 13, or the second switch valve 15. By switching the first switch valve 13 and the second switch valve 15, the control unit 32 can switch the flow path between the first switch valve 13 and the second switch valve 15 in the main flow path 23 to the bypass flow path 24. Moreover, by controlling the pump 11, the control unit 32 can switch the direction of flow of a fluid in the flow path within the gas analysis system.

Furthermore, the control unit 32 can receive a result of analysis by the data processing unit 33 and transmit the result to the outside as necessary or display the result on a monitor or the like (not illustrated).

Other than the fact that the target to be analyzed is a gas, the configuration example of the gas analysis system illustrated in Fig. 22 is basically the same as the configuration of the liquid analysis system illustrated in Fig. 1, and there is no change in the operation example. Therefore, description of the operation example of the gas analysis system will be omitted.

The gas analysis system may adopt a configuration equivalent to any other configuration example of the liquid analysis system described above (Fig. 5, 8, or 11). In this case, the operation is also the same.

Although specific embodiments have been described above, the embodiments described are merely illustrative and are not intended to limit the scope of the present invention. The devices and methods described herein may be embodied in forms other than those described above. In addition, it is also possible to omit, substitute, or modify the above-described embodiments, as appropriate, without departing from the scope of the present invention. Embodiments with such omissions, substitutions, or modifications fall within the scope of the appended claims and equivalents thereof and also fall within the technical scope of the present invention.

### Reference Signs and Symbols

100 liquid analysis device (HPLC device), 11 pump, 12 first buffer portion, 13 first switch valve, 14 HPLC column, 15 second switch valve, 16 second buffer portion, 21 liquid sample collecting flow path, 22 eluent flow path, 23 main flow path, 24 bypass flow path, 25 waste liquid flow path, 26 waste liquid flow path, 27 detection flow path (second bypass flow path), 31 detector, 32 control unit, 33 data processing unit, 41 sample tank, 41a liquid sample, 42 eluent tank, 42a eluent, 43 waste liquid tank, 43a waste liquid, 150 gas analysis device (GC device), 54 GC column, 61 gas sample collecting flow path, 62 carrier gas flow path, 65 waste gas flow path, 71a gas sample, 72 carrier gas tank, 72a carrier gas, 73 detoxifying device, 73a detoxifying substance

## Claims

1. A chromatograph, comprising:
a pump configured to send out a fluid including a sample, the sample being a liquid or a gas;
a column configured to receive the fluid therein and separate components of the sample through interaction between the sample and a stationary phase held inside the column;
a main flow path provided with, from one end side to an opposite end side, a first buffer portion, a first switch valve, the column, a second switch valve, and a second buffer portion;
a bypass flow path connected between the first switch valve and the second switch valve such that the bypass flow path bypasses the column;
a detector configured to detect the components separated by the column; and
a control unit configured to control the pump, the first switch valve, and the second switch valve,
the control unit configured to
switch a flow path between the first switch valve and the second switch valve in the main flow path to the bypass flow path by switching the first switch valve and the second switch valve, and
control the pump, the first switch valve, and the second switch valve, and switch between a first path and a second path, the first path allowing at least a portion of the fluid held in the first buffer portion to flow into the second buffer portion through the main flow path, the second path allowing the fluid held in the second buffer portion to flow into the first buffer portion through the bypass flow path spanning between the first switch valve and the second switch valve in the main flow path.

2. The chromatograph according to claim 1, wherein the detector is disposed in the main flow path.

3. The chromatograph according to claim 2, wherein the detector is disposed between the column and the second switch valve.

4. The chromatograph according to claim 1, wherein the detector is disposed outside the main flow path and the bypass flow path.

5. The chromatograph according to claim 4, further comprising:
a discharge flow path configured to discharge the fluid from a downstream side of the second buffer portion in the first path, wherein
the detector is disposed in the discharge flow path.

6. The chromatograph according to claim 4, further comprising:
a discharge flow path configured to discharge the fluid from between the column and the second buffer portion in the first path, wherein
the detector is disposed in the discharge flow path.

7. The chromatograph according to claim 4, further comprising:
a second bypass flow path connected between the first switch valve and the second switch valve such that the second bypass flow path bypasses the column, wherein
the detector is disposed in the second bypass flow path.

8. The chromatograph according to any one of claims 1 to 7, further comprising:
a sample collecting flow path configured to collect the sample stored in a sample tank; and
a mobile phase medium flow path configured to collect a mobile phase medium stored in a mobile phase medium tank, wherein
one end of the sample collecting flow path and one end of the mobile phase medium flow path are connected to the first switch valve,
the pump is disposed upstream from the first buffer portion in the first path, and
the control unit is configured to switch between injection of the sample and injection of the mobile phase medium into the first buffer portion by controlling the pump and the first switch valve.

9. The chromatograph according to any one of claims 1 to 8, wherein the first buffer portion and the second buffer portion are each a pipe conduit having a predetermined volume.

10. The chromatograph according to claim 9, wherein the predetermined volume is a capacity no smaller than a fluid amount necessary for the column to separate the components.

11. A sample analysis method for use in a chromatograph that includes
a pump configured to send out a fluid including a sample, the sample being a liquid or a gas,
a column configured to receive the fluid therein and separate components of the sample through interaction between the sample and a stationary phase held inside the column,
a main flow path provided with, from one end side to an opposite end side, a first buffer portion, a first switch valve, the column, a second switch valve, and a second buffer portion,
a bypass flow path connected between the first switch valve and the second switch valve such that the bypass flow path bypasses the column, and
a detector configured to detect the components separated by the column,
the sample analysis method comprising:
a separation step of supplying at least a portion of the fluid held in the first buffer portion to the column via the first switch valve in the main flow path such that the column separates the components of the sample;
a holding step of supplying the fluid that has passed through the column to the second buffer portion via the second switch valve in the main flow path and holding the fluid in the second buffer portion;
a collection step of controlling the first switch valve and the second switch valve, switching a flow path between the first switch valve and the second switch valve in the main flow path to the bypass flow path and returning the fluid held in the second buffer portion to the first buffer portion via, sequentially, the second switch valve and the first switch valve with the fluid bypassing the column; and
a detection step of repeating the separation step, the holding step, and the collection step and performing detection by the detector after at least the separation step has been performed N times (N is an integer greater than 1),
the separation step of an n^{th} instance (n is an integer satisfying 1 ≤ n ≤ N) including supplying the fluid from the first buffer portion to the column in a fluid amount n times a fluid amount necessary for the column to separate the components in the separation step of a first instance.

12. The sample analysis method according to claim 11, wherein the detection step includes performing the detection by the detector each time the separation step is performed.

13. The sample analysis method according to claim 11, wherein the detection step includes performing the detection by the detector only after the separation step of an N^{th} instance.

14. The sample analysis method according to claim 11, wherein the detection step includes performing the detection by the detector after the separation step of an m^{th} instance (**m** is an integer satisfying 1 ≤ m < N).
